(19) Europäisches Patentamt
European Patent Office
Office européen des brevets

(11) EP 4 779 739 A1

(12) EUROPEAN PATENT APPLICATION
published in accordance with Art. 153(4) EPC

(43) Date of publication:
22.07.2026 Bulletin 2026/30

(51) International Patent Classification (IPC):
H01M 10/0565 (2010.01)    H01M 4/134 (2010.01)
H01M 10/052 (2010.01)

(21) Application number: 24901093.5

(22) Date of filing: 05.12.2024

(52) Cooperative Patent Classification (CPC):
H01M 4/134; H01M 10/052; H01M 10/0565;
Y02E 60/10

(86) International application number:
PCT/KR2024/019836

(87) International publication number:
WO 2025/121907 (12.06.2025 Gazette 2025/24)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 05.12.2023 KR 20230174313

(71) Applicant: LG Energy Solution, Ltd.
Seoul 07335 (KR)

(72) Inventors:
• KWON, Youngwoo
Daejeon 34122 (KR)

• NAM, Sunghyun
Daejeon 34122 (KR)
• KIM, Jiyoung
Daejeon 34122 (KR)
• KANG, Sungjoong
Daejeon 34122 (KR)
• KIM, Dong Kyu
Daejeon 34122 (KR)
• KIM, Jinil
Daejeon 34122 (KR)

(74) Representative: Goddar, Heinz J.
Boehmert & Boehmert
Anwaltspartnerschaft mbB
Pettenkoferstrasse 22
80336 München (DE)

(54) POLYMER SOLID ELECTROLYTE MEMBRANE AND MANUFACTURING METHOD THEREFOR

(57) The present disclosure relates to a polymeric solid electrolyte film and a method for preparing same, and more particularly, a process in which a uniform thin polymeric solid electrolyte film can be obtained by forming a polymeric solid electrolyte film on a release film and then transferring it to a positive electrode or a lithium negative electrode using a transfer process.

[FIG. 2]

**EP 4 779 739 A1**

**Description**

[Technical Field]

<u>Cross-citation with Related Applications</u>

This application claims the benefit of priority to Korean Patent Application No. 10-2023-0174313, filed December 5, 2023, and Korean Patent Application No. 10-2024-0179288, filed December 5, 2024, the disclosures of which are incorporated herein by reference in their entirety.

<u>Technical Field</u>

The present disclosure relates to a polymeric solid electrolyte film and a method for preparing same.

[Related Art]

Since lithium secondary batteries using liquid electrolytes have a separator that separates the negative electrode from the positive electrode, a short circuit can occur if the separator is damaged by deformation or external impact, which can lead to overheating or explosion. Therefore, the development of a safe solid electrolyte for lithium secondary batteries is a crucial task.

Lithium secondary batteries using solid electrolytes have the advantages of increased safety, improved reliability by preventing leakage of the electrolyte, and ease of manufacturing thin batteries. In addition, lithium metal can be used as a negative electrode to improve energy density, which is expected to be applied to small-sized secondary batteries and high-capacity secondary batteries for electric vehicles, making it the next-generation battery.

Among solid electrolytes, polymeric materials with ionic conductivity can be used as raw materials for polymeric solid electrolytes, and hybrid materials that are a mixture of polymeric and inorganic materials have also been proposed. The inorganic material may be an inorganic material such as an oxide or sulfide.

Such conventional polymeric solid electrolytes have been manufactured through a process of forming a coating film followed by high-temperature drying. However, conventional polymeric solid electrolyte manufacturing technologies had limitations due to the high crystallinity of crystalline polymers or semi-crystalline polymers, which makes it difficult to manufacture polymeric solid electrolytes with improved ionic conductivity. In other words, the higher the crystallinity of the polymer, the lower the chain mobility of the polymer chain, and thus, it is difficult to improve the ionic conductivity of the polymeric solid electrolyte due to the limited movement of lithium ions inside the polymeric solid electrolyte.

Therefore, various methods have been investigated to reduce crystallinity by introducing a long chain moiety into the side chain of polymer, or to increase the mobility of polymer chain by adding additional plasticizer.

In addition, in a polymeric solid electrolyte comprising a polymer matrix and a lithium salt, efforts have been made to improve the ionic conductivity of the polymeric solid electrolyte by adjusting the ratio of the polymer matrix to the lithium salt, but an increase in the lithium salt content results in a decline in the mechanical properties of the polymer solid electrolyte, making it challenging to fabricate a uniform, thin, free-standing film of the polymer solid electrolyte.

Meanwhile, to overcome the limitation of difficulties in manufacturing thin free-standing polymeric solid electrolytes due to the deterioration of mechanical properties, a method of manufacturing a polymeric solid electrolyte by directly applying a polymer solution to the electrode surface has been proposed, but the issues related to side reactions with the electrode has been raised. In particular, in the manufacture of all-solid-state batteries using lithium metal as the negative electrode, side reactions between the lithium metal and the polymer solution have been a problem when forming a polymeric solid electrolyte film by casting a polymer solution onto the lithium metal.

Therefore, it is necessary to develop a technology to manufacture a polymeric solid electrolyte that can prevent side reactions between a polymeric solid electrolyte and an electrode, have high ionic conductivity, and have a uniform thin film form.

[Prior Art Reference]

[Patent Reference]

(Patent Reference 1) Korean Laid-open Patent Publication No. 10-2022-0033460

[Detailed Description of the Invention]

[Technical Problem]

It is an object of the present disclosure to provide a polymeric solid electrolyte film in the form of a uniform thin film with improved surface properties and ionic conductivity by a transfer process.

Another object of the present disclosure is to provide a method of preparing a polymeric solid electrolyte film using a transfer process.

It is another object of the present disclosure to provide an all-solid-state battery manufactured by transferring a polymeric solid electrolyte film onto a positive electrode or a negative electrode by a transfer process.

[Technical Solution]

To accomplish the above objectives, the present disclosure provides a polymeric solid electrolyte film in the form of a thin film with a uniform surface, wherein the surface roughness (Ra) of one side of the polymeric solid electrolyte film is 1.00 $\mu$m or less.

In one example of the present invention, the polymeric solid electrolyte film may comprise 20 to 100 parts by weight of lithium salt, based on 100 parts by weight of polymer for electrolyte.

In one example of the invention, the polymer for electrolyte may comprise at least one selected from the group consisting of polyethylene oxide (PEO), polyethylene carbonate (PEC), polypropylene carbonate (PPC), poly(vinylidene fluoride) (PVDF), poly(ethylene glycol) (PEG), poly(phenylene sulfide) (PPS), and derivatives thereof.

In one example of the present invention, the lithium salt may comprise at least one selected from the group consisting of $(CF_3SO_2)_2NLi$(Lithium bis(trifluoromethanesulphonyl)imide, LiTFSI), $(FSO_2)_2NLi$(Lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN and $LiC(CF_3SO_2)_3$.

In one example of the present invention, an ionic conductivity of the polymeric solid electrolyte film may be at least $1 \times 10^{-5}$ S/cm.

The present disclosure also relates to a method of producing a polymeric solid electrolyte film, comprising (S1) applying a solution for forming a polymeric solid electrolyte film on a release film and drying it to obtain a polymeric solid electrolyte film; (S2) positioning the polymeric solid electrolyte film on a positive electrode or negative electrode to transfer it; and (S3) separating the release film from the polymeric solid electrolyte film, wherein the release film has a peel strength of 15 gf/25 mm or less for the polymeric solid electrolyte film.

In one example of the present invention, the release film may comprise at least one selected from the group consisting of polyethylene terephthalate (PET), polyimide (PI), polyethylene (PE), polybutylene terephthalate (PBT), polypropylene (PP), polyvinyl chloride (PVC), polystyrene (PS), polyamide (PA), polycarbonate (PC), and polytetrafluoroethylene (PTFE).

In one example of the present invention, the drying in step (S1) may be a first drying at 20°C to 30°C, followed by a second drying at 90°C to 110°C.

In one example of the present invention, the solution for forming a polymeric solid electrolyte film may be prepared by mixing the polymer for electrolyte and the lithium salt in a solvent.

In one example of the present invention, the solvent may comprise at least one non-aqueous solvent selected from the group consisting of propylene carbonate (PC), ethylene carbonate (EC), vinylene carbonate (VC), diethyl carbonate (DEC), dimethyl carbonate (DMC), methylethyl carbonate (MEC), ethylmethyl carbonate (EMC), tetrahydrofuran (THF), 2-methyltetrahydrofuran (2MeTHF), dioxolane (DOX), dimethoxyethane (DME), diethoxyethane (DEE), $\gamma$-butyrolactone (GBL), acetonitrile (AN), and sulfolane.

In one example of the present invention, the negative electrode may be a lithium negative electrode.

The present disclosure also provides an all-solid-state battery comprising a positive electrode, a negative electrode, and a polymeric solid electrolyte film interposed therebetween.

In one example of the present disclosure, a surface roughness of one side of the polymeric solid electrolyte film is 1.00 $\mu$m or less, and no additional film is formed between the other side of the polymeric solid electrolyte film and the positive electrode or negative electrode due to the side reactions.

In one example of the present invention, the negative electrode may be a lithium negative electrode.

[Advantageous Effects]

The polymeric solid electrolyte film according to the present disclosure has improved surface properties and ionic conductivity due to the transfer process.

In addition, since it is formed in the form of a polymeric solid electrolyte film on a release film and then transferred to a positive electrode or negative electrode, it has the effect of preventing side reactions between the polymeric solid electrolyte film and the positive electrode or negative electrode.

In addition, through the process of forming and then transferring an electrolyte film of the desired size, it is easy to form a film larger than the positive electrode or negative electrode, which has the effect of physically blocking the internal short circuit that is the main cause of battery ignition.

[Brief Description of Drawing]

FIG. 1 shows the results of ionic conductivity measurements of polymeric solid electrolyte films prepared using the solution casting process of Comparative Examples 4 to 9 as a function of the molar ratio of EO to Li ([EO]:[Li]) in the polymeric solid electrolyte film.
FIG. 2 shows the results of ionic conductivity measurements of polymeric solid electrolyte films prepared using the transfer process of Examples 1 to 6.
FIG. 3 is a photograph of the transfer process of Example 3 and Comparative Example 1.
FIG. 4 is a photograph illustrating the transfer process of Comparative Examples 1 to 3.
FIG. 5 is a photograph of the transfer process of Example 6.
FIGs. 6a to 6c are photographs illustrating the formation of polymeric solid electrolyte films on lithium metal by transfer, solution casting, and free-standing film lamination, respectively.

[Best Mode]

Hereinafter, the present disclosure will be described in more detail to provide a better understanding.
The terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention.
As used herein, the term "surface roughness" refers to the degree of microscopic irregularities on the surface of a polymeric solid electrolyte film, expressed as the arithmetic mean roughness (Ra) value of randomly taken measurements of the microscopic irregularities formed on the surface of the polymeric solid electrolyte film. In other words, a larger measured roughness value indicates a rougher surface.

**Polymeric solid electrolyte film**

The present disclosure relates to a polymeric solid electrolyte film.
The polymeric solid electrolyte film according to the present disclosure is a polymeric solid electrolyte film in the form of a thin film with a uniform surface, wherein the surface roughness (Ra) of one side of the polymeric solid electrolyte film is 1.00 $\mu$m or less.
The polymeric solid electrolyte film may be prepared by a transfer process in which a polymeric solid electrolyte film is formed on a release film and then transferred to an electrode, resulting in a thin film with a uniform surface.
Further, the surface roughness (Ra) of the polymeric solid electrolyte film may be 1.00 $\mu$m or less, 0.90 $\mu$m or less, 0.80 $\mu$m or less, 0.70 $\mu$m or less, 0.60 $\mu$m or less, 0.50 $\mu$m or less, or 0.40 $\mu$m or less. If the surface roughness is greater than 1.00 $\mu$m, the contact with the electrode interface may be unstable and the lithium ion transfer ability may be reduced, and if the surface roughness is high, the polymeric solid electrolyte film may have an uneven surface, which may easily form lithium dendrites and increase the possibility of short circuit of the battery. The surface roughness can be measured by an optical profiler (OP), Atomic Force Microscopy (AFM), etc. If the polymeric solid electrolyte film is formed directly on the surface of the electrode by conventional techniques such as solution casting, it is not easy to obtain a film shape due to side reactions between the polymeric solid electrolyte in the solution state and the electrode, and even if a film shape is obtained, it may not be suitable as an electrolyte film for maintaining battery performance if continuous degradation occurs due to side reactions between the polymeric solid electrolyte and the electrode.
The polymeric solid electrolyte film according to the present disclosure forms a polymeric solid electrolyte film on a release film, and then transfers the polymeric solid electrolyte film onto an electrode, thereby preventing side reactions between the polymeric solid electrolyte in the solution state and the electrode, and thereby obtaining a polymeric solid electrolyte film with a uniform thin film form.
The polymeric solid electrolyte film formed on the release film can be transferred to either of the positive electrode or the negative electrode. In particular, a lithium negative electrode containing lithium metal is highly reactive, but side reactions between the polymeric solid electrolyte film and the lithium negative electrode can be minimized if the polymeric solid electrolyte film is formed and then transferred to the lithium negative electrode.
In one example of the present invention, the polymeric solid electrolyte film may have a thickness of 60 $\mu$m or less.
As described above, it is possible to produce a polymeric solid electrolyte film in the uniform thin film form by the transfer process even using polymers with low mechanical properties. Specifically, the thickness of the polymeric solid electrolyte film may be 60 $\mu$m or less, 50 $\mu$m or less, 40 $\mu$m or less, 30 $\mu$m or less, 20 $\mu$m or less, or 15 $\mu$m or less. The lower limit of the thickness is not particularly limited and may be, for example, 1 $\mu$m or more, 2 $\mu$m or more, 3 $\mu$m or more, or 5 $\mu$m or more.

In one example of the present invention, the polymeric solid electrolyte film may comprise a polymer for electrolyte and a lithium salt.

In one example of the present invention, the polymer for electrolyte may comprise at least one selected from the group consisting of polyethylene oxide (PEO), polyethylene carbonate (PEC), polypropylene carbonate (PPC), poly(vinylidene fluoride) (PVDF), poly(ethylene glycol) (PEG), poly(phenylene sulfide) (PPS), and derivatives thereof. Preferably, the polymer for electrolyte may be polyethylene oxide (PEO).

Further, the weight average molecular weight (Mw) of the polymer for electrolyte may be 300,000 g/mol to 4,000,000 g/mol, more specifically, 300,000 g/mol or more, 400,000 g/mol or more, 500,000 g/mol or more, 600,000 g/mol or more, 700,000 g/mol or more, 800,000 g/mol or more, 900,000 g/mol or more, 1,000,000 g/mol or more, 1,100,000 g/mol or more, 1,200,000 g/mol or more, 1,300,000 g/mol or more, 1,400,000 g/mol or more, or 1,500,000 g/mol or more, and may be 4,000,000 g/mol or less, 3,500,000 g/mol or less, 3,000,000 g/mol or less, 2,500,000 g/mol or less, or 2,000,000 g/mol or less. If the weight average molecular weight (Mw) of the polymer for electrolyte is less than 300,000 g/mol, it may be difficult to obtain a film form comprising a suitable polymer, and if it is greater than 4,000,000 g/mol, the entanglement of the polymer chain in the solution for forming a polymeric solid electrolyte film used in the manufacturing process may increase, the solvent penetration rate into the polymer chain may be reduced, and the gelation of the polymer may be accelerated, thereby reducing the ionic conductivity. In addition, if the weight average molecular weight (Mw) of the polymer for electrolyte is greater than 4,000,000 g/mol, the viscosity of the electrolyte slurry may increase rapidly and become difficult to handle, resulting in a decrease in process efficiency.

In one example of the present invention, the lithium salt may comprise at least one selected from the group consisting of $(CF_3SO_2)_2NLi$(Lithium bis(trifluoromethanesulphonyl)imide, LiTFSI), $(FSO_2)_2NLi$(Lithium bis(fluorosulfonyl)imide, LiFSI), $LiNO_3$, $LiOH$, $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $LiSCN$ and $LiC(CF_3SO_2)_3$. Preferably, the lithium salt may be $(CF_3SO_2)_2NLi$(Lithium bis(trifluoromethanesulphonyl)imide, LiTFSI).

Further, in the polymeric solid electrolyte film, the lithium salt may be comprised in an amount of 20 to 100 parts by weight, based on 100 parts by weight of the polymeric solid electrolyte. If the content of the lithium salt is less than 20 parts by weight, the ionic conductivity of the polymeric solid electrolyte film may be reduced due to the inability to suppress the crystallinity of the polymer, and if the content is greater than 100 parts by weight, the crystallinity of the polymer may be reduced due to the reduced mechanical properties of the polymeric solid electrolyte film. In addition, if the content of the lithium salt is present in excess of 100 parts by weight, it may form aggregates in the electrolyte, which may interfere with ion transfer and eventually degrade the performance of the electrolyte film. Specifically, the content of the lithium salt may be 20 parts by weight or more, 30 parts by weight or more, 40 parts by weight or more, 50 parts by weight or more, 60 parts by weight or more, or 70 parts by weight or more, 85 parts by weight or less, 90 parts by weight or less, or 100 parts by weight or less.

In one example of the present invention, the polymeric solid electrolyte film may comprise polyethylene oxide (PEO) and a lithium salt, wherein the molar ratio of ethylene oxide (EO), a repeating unit of the PEO, to lithium (Li) of the lithium salt ([EO]:[Li]) may be 7:1 to 15:1. If the molar ratio of ethylene oxide to lithium ([EO]:[Li]) is less than 7:1, the content of polymer for electrolyte is reduced, which may cause the deterioration of the mechanical properties of the polymeric solid electrolyte, and if it is more than 15:1, the content of lithium salt is reduced, which may cause the deterioration of the ionic conductivity of the polymeric solid electrolyte film. Specifically, the molar ratio of ethylene oxide to lithium ([EO]:[Li]) may be 7:1 or greater, 7.5:1 or greater, or 8:1 or greater, and may be 10:1 or less, 12:1 or less, or 15:1 or less. The molar ratio of repeating units of other polymers other than PEO to lithium can be in the same range as above.

In one example of the present invention, the ionic conductivity of the polymeric solid electrolyte film may be greater than or equal to $1 \times 10^{-5}$ S/cm, greater than or equal to $2 \times 10^{-5}$ S/cm, or greater than or equal to $3 \times 10^{-5}$ S/cm. Within the above range, larger ionic conductivity values are favorable. The upper limit of the ionic conductivity is not particularly limited, but may be, for example, $5 \times 10^{-5}$ S/cm or less or $6 \times 10^{-5}$ S/cm or less.

In one example of the present invention, the polymeric solid electrolyte film can be easily manufactured in a large size relative to the positive electrode or negative electrode. Since the polymeric solid electrolyte film is not formed directly on the positive electrode or negative electrode, but rather a polymeric solid electrolyte in the form of a uniform thin film is first prepared and then transferred to the positive electrode or negative electrode, a polymeric solid electrolyte film of a larger size than the positive electrode or negative electrode can be easily prepared, and the contact between the positive electrode and the negative electrode can be blocked to prevent an internal short circuit.

In general, a polymer for electrolyte, such as polyethylene oxide, has a high crystallinity, which makes it difficult to manufacture a polymeric solid electrolyte film with high ionic conductivity using polyethylene oxide as a raw material, but attempts have been made to overcome this by reducing the crystallinity of polyethylene oxide. However, when reducing the crystallinity of polyethylene oxide to produce a thin electrolyte film, it was difficult to produce a uniform electrolyte film due to a decrease in mechanical properties. Thus, by introducing a transfer process, it is possible to produce a polymeric solid electrolyte film with high ionic conductivity despite being based on a polymer for electrolyte such as polyethylene oxide. Additionally, using a transfer process makes it possible to produce an electrolyte film with an area larger than the substrate, providing the advantage of physically preventing internal short circuits caused by contact between the positive and negative electrodes, which can lead to battery ignition.

The polymeric solid electrolyte film as described above can be prepared as a free-standing film in the form of a uniform thin film by a transfer process.

**Method for preparing polymeric solid electrolyte film**

The present disclosure also relates to a method of preparing a polymeric solid electrolyte film.

A method of producing a polymeric solid electrolyte film according to the present disclosure comprises (S1) applying a solution for forming a polymeric solid electrolyte film on a release film and drying it to obtain a polymeric solid electrolyte film; (S2) positioning the polymeric solid electrolyte film on a positive electrode or negative electrode to transfer it; and (S3) separating the release film from the polymeric solid electrolyte film, wherein the release film may have a peel strength with respect to the polymeric solid electrolyte film of 15 gf/25 mm or less.

Hereinafter, a method for preparing a polymeric solid electrolyte film according to the present invention will be described in more detail by each step. The properties and content of the raw material used in the method of manufacture are as described above.

In one example of the present invention, in step (S1), a polymeric solid electrolyte film can be obtained by applying a solution for forming a polymeric solid electrolyte film on the release film and then drying it.

The release film may have a peel strength with respect to the polymeric solid electrolyte film of 15 gf/25 mm or less. If the peel strength is greater than 15 gf/25 mm, it may be difficult to separate the release film from the polymeric solid electrolyte film, and the transfer process may not be carried out smoothly. Specifically, the peel strength may be 15 gf/25 mm or less, 13 gf/25 mm or less, 10 gf/25 mm or less, 8 gf/25 mm or less, 5 gf/25 mm or less. The lower limit of the peel strength is not particularly limited and may be, for example, 0.5 gf/25 mm or more.

Furthermore, when the peel strength of the release film is included in the above range, the polymeric solid electrolyte formed by removing the release film can be prepared in the form of a uniform thin film having a surface roughness of 1.00 $\mu$m or less.

Furthermore, the release film is not particularly limited as long as it meets the peel strength as described above. For example, the release film may comprise at least one selected from the group consisting of polyethylene terephthalate (PET), polyimide (PI), polyethylene (PE), polybutylene terephthalate (PBT), polypropylene (PP), polyvinyl chloride (PVC), polystyrene (PS), polyamide (PA), polycarbonate (PC), and polytetrafluoroethylene (PTFE).

Furthermore, the thickness of the release film is not particularly limited, but may be 10 $\mu$m to 100 $\mu$m for the convenience of the process. If the thickness of the release film is less than 10 $\mu$m, the surface roughness of the solid electrolyte film formed on it may also be rough due to the difference in surface roughness of the release film, and the release film may break or fracture during the process. If the thickness of the release film is more than 100 $\mu$m, the release film becomes too thick and heavy, which may cause problems such as sagging during the process. Specifically, the thickness of the release film may be 10 $\mu$m or more, 20 $\mu$m or more, 30 $\mu$m or more, or 40 $\mu$m or more, and may be 100 $\mu$m or less, 90 $\mu$m or less, 80 $\mu$m or less, 70 $\mu$m or less, or 60 $\mu$m or less.

The solution for forming a polymeric solid electrolyte film may be prepared by mixing the polymer for electrolyte and the lithium salt in a solvent. The type and weight of the polymer for electrolyte and lithium salt are as described above.

Furthermore, the concentration of the solution for forming a polymeric solid electrolyte film may be appropriately adjusted in consideration of the extent to which the application process can proceed smoothly when the solution for forming a polymeric solid electrolyte film is applied to the release film. For example, the concentration of the solution for forming a polymeric solid electrolyte film may be such that the concentration of the electrolyte polymer in the solution is 3% to 10%, and more specifically, may be 3% or more, 4% or more, or 5% or more, 6% or less, 8% or less, or 10% or less. If the concentration of the solution for forming a polymeric solid electrolyte film is less than 3%, the concentration is excessively low, which may cause it to flow off when applied to the release film, and if it exceeds 10%, it is difficult to dissolve the desired amount of lithium salt in the solution, and the high viscosity may make it challeging to apply the solution in a uniform thin film form.

Further, the solvent is not particularly limited as long as it is capable of uniformly dispersing the polymer for electrolyte and the lithium salt to form a solution. For example, the solvent may comprise at least one non-aqueous solvent selected from the group consisting of propylene carbonate (PC), ethylene carbonate (EC), vinylene carbonate (VC), diethyl carbonate (DEC), dimethyl carbonate (DMC), methylethyl carbonate (MEC), ethylmethyl carbonate (EMC), tetrahydrofuran (THF), 2-methyltetrahydrofuran (2MeTHF), dioxolane (DOX), dimethoxyethane (DME), diethoxyethane (DEE), $\gamma$-butyrolactone (GBL), acetonitrile (AN), and sulfolane.

Furthermore, the application method is not particularly limited as long as it is capable of uniformly applying the solution for forming a polymeric solid electrolyte film onto the release film. For example, the application method may be bar coating, roll coating, spin coating, slit coating, die coating, blade coating, comma coating, slot die coating, lip coating, or solution casting.

The drying may be a first drying at 20°C to 40°C, followed by a second drying at 80°C to 120°C. The first drying can remove solvent, and the second drying can strengthen the mechanical properties of the polymeric solid electrolyte film.

Further, the temperature during the first drying may be 20°C or more, 21°C or more, or 22°C or more, and may be 30°C or less, 35°C or less, or 40°C or less. If the temperature during the first drying is below 20°C, the solvent in the polymeric solid electrolyte film may not be removed as much as desired, and if the temperature is above 40°C, the evaporation rate of the solvent is excessively promoted, and a crater-like form is generated on the surface of the electrolyte film, resulting in a large surface roughness.

Further, the temperature during the second drying may be 80°C or more, 85°C or more, or 90°C or more, and may be 100°C or less, 115°C or less, or 120°C or less. If the temperature during the second drying is below 80°C, the film may not be formed, and if the temperature is above 120°C, the polymer for electrolyte or lithium salt contained in the film may be denatured, resulting in a decrease in properties such as ionic conductivity.

In one example of the present invention, in step (S2), the polymeric solid electrolyte film may be positioned on the positive electrode or negative electrode, and transferred thereon. In this case, one side of the polymeric solid electrolyte film other than the side abutting the release film may be positioned on the positive electrode or negative electrode.

The transfer may include positioning the polymeric solid electrolyte film on the positive electrode or negative electrode and then using a tool, such as a roll, to adhere the polymeric solid electrolyte film to the interface of the positive electrode or negative electrode. The polymeric solid electrolyte film has sticky properties of its own, so it can be easily transferred without pressurizing process with a high pressure.

Furthermore, since the polymeric solid electrolyte film is already formed in the form of a film on the release film and then transferred to the positive electrode or negative electrode, side reactions between the polymeric solid electrolyte film and the positive electrode or negative electrode can be prevented. If a solution for forming a polymeric solid electrolyte film is applied to the positive electrode or negative electrode to form a film directly, side reactions may occur between the raw material existing in a state with a high degree of freedom in the solution and the positive electrode or negative electrode, resulting in poor interfacial properties of the positive electrode or negative electrode, or additional films may be formed by side reactions.

In addition, the reactivity of lithium in a lithium negative electrode containing lithium metal among negative electrodes is high, but side reactions can be prevented if the polymeric solid electrolyte film is transferred onto the lithium negative electrode using a transfer process.

In one example of the present invention, in step (S3) above, the release film may be removed from the polymeric solid electrolyte film.

Once the polymeric solid electrolyte film is attached to the positive electrode or negative electrode in step (S2), the release film can be removed, and the transfer process is completed.

**All-solid-state battery**

The present disclosure also relates to an all-solid-state battery comprising the polymeric solid electrolyte, wherein the all-solid-state battery comprises a negative electrode, a positive electrode, and a polymeric solid electrolyte film interposed between the negative electrode and positive electrode, and the polymeric solid electrolyte film has the features described above.

In one example of the present invention, the surface roughness of one side of the polymeric solid electrolyte film is 1.00 $\mu$m or less, and no additional film is formed between the other side of the polymeric solid electrolyte film and the positive electrode or negative electrode due to the side reactions.

The polymeric solid electrolyte film is formed in the form of a film on a release film and then transferred to the positive electrode or negative electrode, so that one side of the polymeric solid electrolyte film from which the release film is removed after transfer has a uniform surface characteristic.

Thus, side reactions are prevented between the polymeric solid electrolyte film and the positive electrode or negative electrode, which may be in simple physical contact.

Furthermore, since the side reactions are prevented on the interface between the polymeric solid electrolyte film and the positive electrode or negative electrode, an additional film due to the side reactions is not formed. When side reactions occur, the continuous consumption of the electrolyte film can lead to a decline in battery performance. When side reactions are suppressed, stable batteries can be manufactured that do not degrade in performance.

In particular, the negative electrode may be a lithium negative electrode, and side reactions may be prevented between the negative electrode comprising a lithium metal with a high reactivity and the polymeric solid electrolyte film.

In one example of the present invention, the positive electrode included in the all-solid-state battery comprises a positive electrode active material layer, wherein the positive electrode active material layer may be formed on one side of the positive electrode current collector.

The positive electrode active material layer includes a positive electrode active material, a binder, and a conductive material.

Furthermore, the positive electrode active material may be any material capable of reversibly adsorbing and releasing lithium ions, without being particularly limited thereto, for example, a layered compound such as lithium cobalt oxide ($LiCoO_2$), lithium nickel oxide ($LiNiO_2$), $Li[Ni_xCo_yMn_zM_v]O_2$ (wherein M is any one or two or more elements selected from the group consisting of Al, Ga and In; and $0.3 \leq x < 1.0$, $0 \leq y$, $z \leq 0.5$, $0 \leq v \leq 0.1$, and $x+y+z+v=1$), $Li(Li_aM_{b-a-b'}M'_{b'})O_{2-c}A_c$ (wherein $0 \leq a \leq 0.2$, $0.6 \leq b \leq 1$, $0 \leq b' \leq 0.2$, and $0 \leq c \leq 0.2$; M comprises at least one selected from the group consisting of Mn, Ni, Co, Fe, Cr, V, Cu, Zn, and Ti; M' comprises at least one selected from the group consisting of Al, Mg and B; and A comprises at least one selected from the group consisting of P, F, S and N), or a compound substituted with one or more transition metals; a lithium manganese oxide such as a compound of formula $Li_{1+y}Mn_{2-y}O_4$ (wherein y is 0 to 0.33), $LiMnO_3$, $LiMn_2O_3$, or $LiMnO_2$; a lithium copper oxide ($Li_2CuO_2$); a vanadium oxide, such as $LiV_3O_8$, $LiFe_3O_4$, $V_2O_5$, or $Cu_2V_2O_7$; a Ni site-type lithium nickel oxide represented by formula $LiNi_{1-y}MyO_2$ (wherein M is Co, Mn, Al, Cu, Fe, Mg, B or Ga, and y is 0.01 to 0.3; a lithium manganese complex oxide represented by formula LiMn2-yMyO2 (wherein M is Co, Ni, Fe, Cr, Zn, or Ta, and y is 0.01 to 0.1) or $Li_2Mn_3MO_8$ (wherein M is Fe, Co, Ni, Cu, or Zn); $LiMn_2O_4$, in which a portion of the Li in the formula is substituted by an alkaline earth metal ion; a disulfide compound; $Fe_2(MoO_4)_3$; and the like, but not limited thereto.

Further, the positive electrode active material may be included in an amount of 40 to 80% by weight based on the total weight of the positive electrode active material layer. Specifically, the content of the positive electrode active material may be 40% by weight or more, 50% by weight or more, or may be 70% by weight or less, or 80% by weight or less. **If** the content of the positive electrode active material is less than 40% by weight, the connectivity between the wet positive electrode active material layer and the dry positive electrode active material layer may be insufficient, and if it is more than 80% by weight, the mass transfer resistance may be large.

In addition, the binder is a component that assists in the bonding of the positive electrode active material and the conductive material or the bonding to a current collector, and may comprise at least one selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polypichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Advantageously, the binder may comprise at least one selected from the group consisting of styrene-butadiene rubber, polytetrafluoroethylene, carboxymethylcellulose, polyacrylic acid, lithium polyacrylate and polyvinylidene fluoride.

Further, the binder may be comprised in an amount of 1% by weight to 30% by weight based on the total weight of the positive electrode active material layer, and more specifically, the content of the binder may be greater than or equal to 1% by weight or greater than or equal to 3% by weight, and less than or equal to 15% by weight or less than or equal to 30% by weight. If the binder content is less than 1% by weight, the adhesion of the positive electrode active material to the positive electrode current collector may be reduced, and if the binder content is greater than 30% by weight, the adhesion may be improved, but the content of the positive electrode active material may be reduced, resulting in a lower cell capacity.

Furthermore, the conductive material is not particularly limited as long as it prevents side reactions in the internal environment of an all-solid-state battery and has excellent electrical conductivity without causing chemical changes in the battery, and graphite or conductive carbon can be used as a representative, for example, graphite such as natural graphite, artificial graphite, and the like; carbon black such as carbon black, acetylene black, ketjen black, denka black, thermal black, channel black, furnace black, lamp black, summer black, and the like; carbon-based materials having a crystal structure of graphene or graphite; conductive fibers such as carbon fibers, metal fibers, etc.; carbon fluorides; metal powders, such as aluminum powder, nickel powder, etc.; conductive whiskeys, such as zinc oxide, potassium titanate, etc.; conductive oxides, such as titanium oxide; and conductive polymers, such as polyphenylene derivatives; can be used alone or in a mixture of two or more of the foregoing, but are not necessarily limited thereto.

Further, the conductive material may be comprised in an amount of 0.5% by weight to 30% by weight based on the total weight of the positive electrode active material layer, and more specifically, the content of the conductive material may be 0.5% by weight or more, or 1% by weight or more, and may be 20% by weight or less, or 30% by weight or less. If the content of the conductive material is too small, such as less than 0.5% by weight, it is difficult to expect the effect of improving the electrical conductivity or the electrochemical properties of the battery may be degraded, and if it is too large, such as more than 30% by weight, the amount of positive electrode active material may be relatively small, resulting in a decrease in capacity and energy density. The method of incorporating the conductive material into the positive electrode is not substantially limited, and any conventional method known in the art can be used, such as coating the positive electrode active material.

Further, the positive electrode current collector supports the positive electrode active material layer and serves to transfer electrons between the outer wire and the positive electrode active material layer.

The positive electrode current collector is not particularly limited as long as it has a high electronic conductivity without causing chemical changes in an all-solid-state battery. For example, copper, stainless steel, aluminum, nickel, titanium, palladium, calcined carbon, copper or stainless steel whose surface is treated with carbon, nickel, or silver, aluminum-cadmium alloy, and the like may be used as the positive electrode current collector.

The positive electrode current collector may have a microscopic uneven structure or adopt a three-dimensional porous structure on the surface of the positive electrode current collector to strengthen the binding force with the positive electrode active material layer. Accordingly, the positive electrode current collector may comprise various forms such as film, sheet, foil, mesh, net, porous material, foam, nonwoven material, and the like.

The positive electrode as described above can be manufactured according to conventional methods, and more specifically, by applying a composition for forming a positive electrode active material layer prepared by mixing a positive electrode active material with a conductive material and a binder in an organic solvent on the positive electrode current collector and drying same, and optionally, compression molding same on the current collector to improve the electrode density. In this case, it is preferable to use an organic solvent that can uniformly disperse a positive electrode active material, a binder and a conductive material, and is easily evaporated. Specifically, the examples include acetonitrile, methanol, ethanol, tetrahydrofuran, water, and isopropyl alcohol.

In one example of the present invention, the negative electrode comprised in the all-solid-state battery comprises a negative electrode active material layer, wherein the negative electrode active material layer may be formed on one side of the negative electrode current collector.

The negative electrode active material may comprise a material capable of reversibly intercalating or deintercalating lithium ($Li^+$), a material capable of reacting with lithium ions to reversibly form a lithium-containing compound, a lithium metal, or a lithium alloy.

The material into which the lithium ions ($Li^+$) can be reversibly inserted or removed can be, for example, crystalline carbon, amorphous carbon, or a mixture thereof. The material capable of reacting with the lithium ions ($Li^+$) to reversibly form a lithium-containing compound may be, for example, tin oxide, titanium nitrate, or silicon. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, more specifically in the form of a lithium metal thin film or lithium metal powder.

The negative electrode active material may be comprised in an amount of 40 to 80% by weight based on the total weight of the negative electrode active material layer. Specifically, the content of the negative electrode active material may be 40% by weight or more, 50% by weight or more, or may be 70% by weight or less, or 80% by weight or less. If the content of the negative electrode active material is less than 40% by weight, the connectivity between the wet negative electrode active material layer and the dry negative electrode active material layer may be insufficient, and if the content is greater than 80% by weight, the mass transfer resistance may be greater.

Further, the binder is as described above for the positive electrode active material layer.

In addition, the conductive material is as described above for the positive electrode active material layer.

Furthermore, the negative electrode current collector is not particularly limited as long as it is conductive without causing chemical changes in the battery, for example, copper, stainless steel, aluminum, nickel, titanium, calcined carbon, copper or stainless steel whose surface is treated with carbon, nickel, or silver, aluminum-cadmium alloy, and the like can be used. Also, like the positive electrode current collector, the negative electrode current collector can be in various forms, such as a film, sheet, foil, net, porous material, foam, nonwoven material, etc. with fine irregularities formed on the surface.

The method of manufacturing a negative electrode is not particularly limited, and can be manufactured by forming a negative electrode active material layer on the negative electrode current collector using a conventional method of forming a layer or a film. For example, methods such as pressing, coating, or deposition can be utilized. The negative electrode of the present disclosure also includes a case in which a metallic lithium thin film is formed on a metal plate by initial charging after the battery is assembled without a lithium thin film on the negative electrode current collector.

Also, the present disclosure provides a battery module comprising the all-solid-state battery as a unit cell, a battery pack comprising the battery module, and a device comprising the battery pack as a power source.

Specific examples of such devices include, but are not limited to, a power tool powered by an electric motor; an electric vehicle, including an electric vehicle (EV), a hybrid electric vehicle (HEV), a plug-in hybrid electric vehicle (PHEV), and the like; an electric two-wheeled vehicle, including an electric bicycle (E-bike) and an electric scooter (E-scooter); an electric golf cart; a power storage system; and the like.

[Mode for Practicing the Invention]

Hereinafter, preferred examples of the present disclosure are described for the purpose of illustrating the present invention, but it will be apparent to those skilled in the art that various changes and modifications are possible within the scope of the present disclosure and the technical idea, and that such changes and modifications fall within the scope of the appended patent claims.

In the following examples and comparative examples, a polymeric solid electrolyte film and an all-solid-state battery were prepared according to the composition, type of release film, and process as described in Table 1 below.

[Table 1]

| | Polymer for electrolyte (PEO, % by weight) | Lithium salt (LiTFSI, % by weight) | [EO]:[Li] | Thickness of polymeric solid electrolyte film (μm) | Peel strength of release film (gf/mm) | Process |
|---|---|---|---|---|---|---|
| Example 1 | 100 | 81.3 | 8:1 | 12 | 12 | Transfer |
| Example 2 | 100 | 81.3 | 8:1 | 27 | 12 | Transfer |
| Example 3 | 100 | 81.3 | 8:1 | 37 | 12 | Transfer |
| Example 4 | 100 | 81.3 | 8:1 | 45 | 12 | Transfer |
| Example 5 | 100 | 81.3 | 8:1 | 51 | 12 | Transfer |
| Example 6 | 100 | 81.3 | 8:1 | 40 | 2 | Transfer |
| Example 7 | 100 | 81.3 | 8:1 | 50 | 4.2 | Transfer |
| Example 8 | 100 | 81.3 | 8:1 | 50 | 7.7 | Transfer |
| Example 9 | 100 | 81.3 | 8:1 | 50 | 10.7 | Transfer |
| Comparative Example 1 | 100 | 81.3 | 8:1 | 12 | 18 | Transfer |
| Comparative Example 2 | 100 | 81.3 | 8:1 | 12 | 455 | Transfer |
| Comparative Example 3 | 100 | 81.3 | 8:1 | 12 | 600 | Transfer |
| Comparative Example 4 | 100 | 32.7 | 20:1 | 100 | - | Solution casting |
| Comparative Example 5 | 100 | 40.7 | 16:1 | 100 | - | Solution casting |
| Comparative Example 6 | 100 | 54.3 | 12:1 | 100 | - | Solution casting |
| Comparative Example 7 | 100 | 81.3 | 8:1 | 100 | - | Solution casting |
| Comparative Example 8 | 100 | 108.7 | 6:1 | 100 | - | Solution casting |
| Comparative Example 9 | 100 | 130.3 | 4:1 | 100 | - | Solution casting |
| Comparative Example 10 | 100 | 81.3 | 8:1 | 38 | 12 | Free-standing |

**Example 1**

Polyethylene oxide (Mw: 600 K g/mol, Sigma Aldrich), a polymer for electrolyte, and LiTFSI, a lithium salt, were mixed in acetonitrile, a solvent, to prepare a solution for forming a polymeric solid electrolyte. The mixing was performed by stirring with a magnetic bar for 24 hours at 90°C. The solution was prepared such that the concentration of polyethylene oxide contained in the solution was 5.8%.

The above solution for forming a polymeric solid electrolyte film was applied to the release film A (peel strength: 12 gf/25 mm, thickness: 38 μm), and after solution casting, the solution was first dried at room temperature for 12 hours and secondly dried at 100°C for 12 hours to form a 12 μm thick polymeric solid electrolyte film. The polymeric solid electrolyte film was transferred to the stainless steel (SS) substrate of the coin cell, and the release film was removed to assemble the coin cell.

**Example 2**

The polymeric solid electrolyte film and coin cell were prepared by the same method as in Example 1, except that the thickness of the polymeric solid electrolyte film was 27 µm.

**Example 3**

The polymeric solid electrolyte film and coin cell were prepared by the same method as in Example 1, except that the thickness of the polymeric solid electrolyte film was 37 µm.

**Example 4**

The polymeric solid electrolyte film and coin cell were prepared by the same method as in Example 1, except that the thickness of the polymeric solid electrolyte film was 45 µm.

**Example 5**

The polymeric solid electrolyte film and coin cell were prepared by the same method as in Example 1, except that the thickness of the polymeric solid electrolyte film was 51 µm.

**Example 6**

The polymeric solid electrolyte film and coin cell were prepared by the same method as in Example 1, except that release film B (peel strength: 2 gf/25 mm, thickness: 78 µm) was used instead of release film A, and the thickness of the polymeric solid electrolyte film was 40 µm.

**Example 7**

The polymeric solid electrolyte film and coin cell were prepared by the same method as in Example 1, except that release film F (peel strength: 4.2 gf/25 mm, thickness: 50 µm) was used instead of release film A, and the thickness of the polymeric solid electrolyte film was 50 µm.

**Example 8**

The polymeric solid electrolyte film and coin cell were prepared by the same method as in Example 1, except that release film G (peel strength: 7.7 gf/25 mm, thickness: 78 µm) was used instead of release film A, and the thickness of the polymeric solid electrolyte film was 50 µm.

**Example 9**

The polymeric solid electrolyte film and coin cell were prepared by the same method as in Example 1, except that release film H (peel strength: 10.7 gf/25 mm, thickness: 76 µm) was used instead of release film A, and the thickness of the polymeric solid electrolyte film was 50 µm.

**Comparative Example 1**

The polymeric solid electrolyte film and coin cell were prepared by the same method as in Example 1, except that release film C (peel strength: 18 gf/25 mm, thickness: 50 µm) was used instead of release film A.

**Comparative Example 2**

The polymeric solid electrolyte film and coin cell were prepared in the same way as in Example 1, except that release film D (peel strength: 455 gf/25 mm, thickness: 78 µm) was used instead of release film A.

**Comparative Example 3**

The polymeric solid electrolyte film and coin cell were prepared by the same method as in Example 1, except that release film E (peel strength: 600 gf/25 mm, thickness: 39 µm) was used instead of release film A.

## Comparative Example 4

Rather than casting the solution for forming a polymeric solid electrolyte film of Example 1 onto the release film A, the solution was cast onto the stainless steel (SS) substrate, which is the coin cell bottom substrate, and then first dried at room temperature for 12 hours and second dried at 100°C for 12 hours to form a 100 μm thick polymeric solid electrolyte film.

## Comparative Example 5

In preparing a polymeric solid electrolyte solution of Example 1, the polymeric solid electrolyte film and coin cell were prepared in the same manner as in Comparative Example 4, except that the molar ratio ([EO]/[Li]) of ethylene oxide (EO) of the polyethylene oxide to lithium (Li) of the lithium salt was 16:1, and 40.7 parts by weight of the LiTFSI was mixed for 100 parts by weight of the polyethylene oxide.

## Comparative Example 6

In preparing a polymeric solid electrolyte solution of Example 1, the polymeric solid electrolyte film and coin cell were prepared in the same manner as in Comparative Example 4, except that the molar ratio ([EO]/[Li]) of ethylene oxide (EO) of the polyethylene oxide to lithium (Li) of the lithium salt was 12:1, and 54.3 parts by weight of the LiTFSI was mixed for 100 parts by weight of the polyethylene oxide.

## Comparative Example 7

In preparing a polymeric solid electrolyte solution of Example 1, the polymeric solid electrolyte film and coin cell were prepared in the same manner as in Comparative Example 4, except that the molar ratio ([EO]/[Li]) of ethylene oxide (EO) of the polyethylene oxide to lithium (Li) of the lithium salt was 8:1, and 81.3 parts by weight of the LiTFSI was mixed for 100 parts by weight of the polyethylene oxide.

## Comparative Example 8

In preparing a polymeric solid electrolyte solution of Example 1, the polymeric solid electrolyte film and coin cell were prepared in the same manner as in Comparative Example 4, except that the molar ratio ([EO]/[Li]) of ethylene oxide (EO) of the polyethylene oxide to lithium (Li) of the lithium salt was 6:1, and 108.7 parts by weight of the LiTFSI was mixed for 100 parts by weight of the polyethylene oxide.

## Comparative Example 9

In preparing a polymeric solid electrolyte solution of Example 1, the polymeric solid electrolyte film and coin cell were prepared in the same manner as in Comparative Example 4, except that the molar ratio ([EO]/[Li]) of ethylene oxide (EO) of the polyethylene oxide to lithium (Li) of the lithium salt was 4:1, and 130.3 parts by weight of the LiTFSI was mixed for 100 parts by weight of the polyethylene oxide.

## Comparative Example 10

A polymeric solid electrolyte film was formed on the release film in the same manner as in Example 1, except that the thickness was 38 μm, and then the dried polymeric solid electrolyte film was separated from the release film to prepare a thin polymeric solid electrolyte film in the free-standing form without a support.

## Experimental Example 1: Measurement of ionic conductivity in polymeric solid electrolyte film

In order to measure the ionic conductivity of the polymeric solid electrolyte film prepared in the examples and comparative examples, a coin cell was prepared by punching the polymeric solid electrolyte film in a circle with a size of 1.7671 cm$^2$ and placing the punched polymeric solid electrolyte between two sheets of stainless steel (SS).

After measuring the resistance using an electrochemical impedance spectrometer (EIS, VM3, Bio Logic Science Instrument) at 25°C with an amplitude of 10 mV and a scan range of 500 KHz to 20 MHz, the ionic conductivity of the polymeric solid electrolyte film was calculated using Formula 1 below.

[Formula 1]

$$\sigma_i = \frac{L}{RA}$$

In Formula 1, $\sigma i$ is the ionic conductivity of the polymeric solid electrolyte film (S/cm), R is the resistance of the polymeric solid electrolyte film ($\Omega$) measured by the electrochemical impedance stectrometer, L is the thickness of the polymeric solid electrolyte film ($\mu$m), and A is the area of the polymeric solid electrolyte film (cm$^2$).

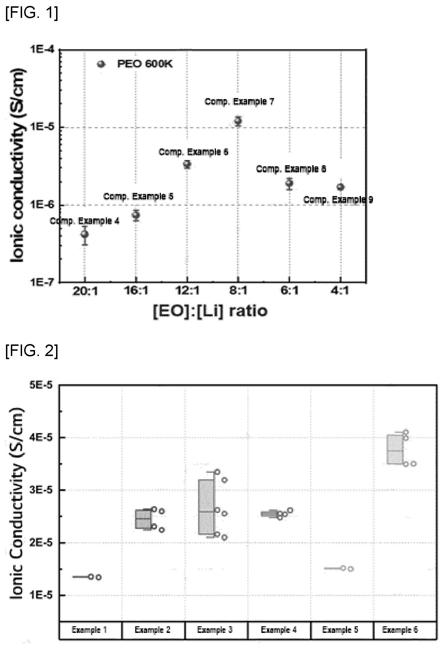

FIG. 1 and Table 2 below show the results of ionic conductivity measurements of the polymeric solid electrolyte films prepared using the solution casting process as a function of the molar ratio of EO to Li ([EO]:[Li]).

[Table 2]

|  | [EO]:[Li] | $\sigma_i$ (S/cm) |
|---|---|---|
| Comparative Example 4 | 20:1 | $4.2 \times 10^{-7}$ |
| Comparative Example 5 | 16:1 | $7.4 \times 10^{-7}$ |
| Comparative Example 6 | 12:1 | $3.8 \times 10^{-6}$ |
| Comparative Example 7 | 8:1 | $1.2 \times 10^{-5}$ |
| Comparative Example 8 | 6:1 | $1.9 \times 10^{-6}$ |
| Comparative Example 9 | 4:1 | $1.7 \times 10^{-6}$ |

As shown in FIG. 1 and Table 2 above, the ionic conductivity of the polymeric solid electrolyte film prepared by solution casting was found to be the highest when [EO]:[Li] was 8:1, as shown in Comparative Example 7.

FIG. 2 and Table 3 below show the results of ionic conductivity measurements of the polymeric solid electrolyte films prepared using the transfer process.

The polymeric solid electrolyte films of Examples 1 to 9 below all have [EO]:[Li] ratio of 8:1, which corresponds to the [EO]:[Li] in Table 1 above where the ionic conductivity of the polymeric solid electrolyte film can be shown to be excellent.

[Table 3]

|  | [EO]:[Li] | Peel strength of release film (gf/25 mm) | $\sigma_i$ (S/cm) |
|---|---|---|---|
| Example 1 | 8:1 | 12 | $1.35 \times 10^{-5}$ |
| Example 2 | 8:1 | 12 | $2.44 \times 10^{-5}$ |
| Example 3 | 8:1 | 12 | $2.66 \times 10^{-5}$ |
| Example 4 | 8:1 | 12 | $2.55 \times 10^{-5}$ |
| Example 5 | 8:1 | 12 | $1.51 \times 10^{-5}$ |
| Example 6 | 8:1 | 2 | $3.77 \times 10^{-5}$ |
| Example 7 | 8:1 | 4.2 | $2.48 \times 10^{-5}$ |
| Example 8 | 8:1 | 7.7 | $2.20 \times 10^{-5}$ |
| Example 9 | 8:1 | 10.7 | $1.84 \times 10^{-5}$ |

Referring to FIG. 2 and Table 3 above, it can be seen that the ionic conductivity of Example 6 is high. The release film used in Example 6 has a peel strength of 2 gf/25 mm, which is less than the peel strength of 12 gf/25 mm for the release films used in Examples 1 to 5. From this, it can be seen that when manufacturing polymeric solid electrolyte films, if the peel strength of the release film used in the transfer process is small, the electrolyte film and the release film can be easily separated from each other, and deformation such as fracture or stretching is suppressed, reducing process issues, and the ionic conductivity is high.

**Experimental Example 2: Confirmation of feasibility of transfer process**

The transfer processes of Example 3, Comparative Example 1, and Comparative Example 2 were visually verified. The release films used in the transfer process of Example 3, Comparative Example 1, and Comparative Example 2 have peel strengths of 12 gf/25 mm, 18 gf/25 mm, and 455 gf/25 mm, respectively.

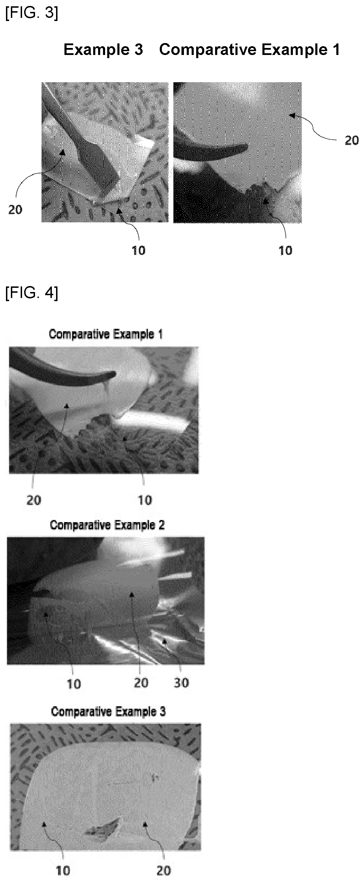

FIG. 3 is photographs showing the feasibility of the transfer process of Example 3 and Comparative Example 1. In the manufacture of polymeric solid electrolyte films, the feasibility of the transfer process was observed depending on the peel strength of the release film used in the transfer process.

Referring to FIG. 3, it is seen that the peel strength of the release film used in the transfer process in Comparative Example 1 is relatively large compared to that of Example 1, so that the release film (10) does not release from the polymeric solid electrolyte film (20), and when attempting to separate the release film and solid electrolyte film by external force, damage and deformation of the film were observed. This shows that release films with a peel strength of 18 gf/25 mm or more cannot be transferred.

FIG. 4 is photographs observing the transfer process of Comparative Examples 1 to 3.

Referring to FIG. 4, it is confirmed that if the peel strength of the release film used in the transfer process is large, the release film (10) cannot be separated from the polymeric solid electrolyte film (20), resulting in deformation of the film during the transfer process, and it is difficult to transfer the polymeric solid electrolyte film (20) onto the lithium negative electrode (30).

Since the peel strength of the release film (10) used in the transfer process in Comparative Examples 1, 2 and 3 is 18 gf/25 mm, 455 gf/25 mm, and 600 gf/25 mm, respectively, it can be seen that the peel strength of the release film should be less than this.

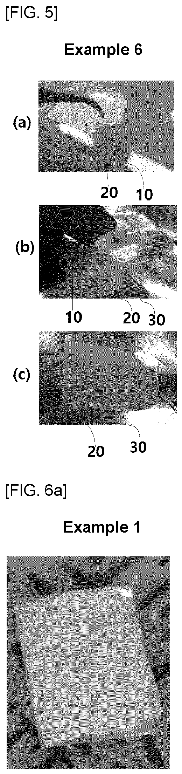

FIG. 5 is photographs illustrating the transfer process for fabricating the polymeric solid electrolyte film of Example 6.

Referring to FIG. 5, it can be seen that the polymeric solid electrolyte film (20) formed on the release film (10) easily releases from the release film (10) (a). Utilizing these characteristics, the polymeric solid electrolyte film (20) can be transferred to the surface of the lithium negative electrode (30) to be transferred, while removing the release film (10) on one side of the polymeric solid electrolyte film (20) (b) to obtain a polymeric solid electrolyte film (20) in a state of being laminated with the lithium negative electrode (30) (c).

**Experimental Example 3: Measurement of surface roughness**

In order to measure the surface roughness of the polymeric solid electrolyte films of Example 6 and Comparative Example 7 prepared by the transfer process and solution casting, respectively, the polymeric solid electrolyte films prepared in Example 6 and Comparative Example 7 were sampled in the size of 1 cm$^2$ square and fixed with carbon tape on a holder for surface roughness measurement while attached to a release film.

A 3D optical profiler (OP, NV-F2700, Nano System) was used to measure the surface roughness of a 2D plane at room temperature in WSI mode, 0.5 mm wide x 0.5 mm long, to obtain Ra, which is the surface roughness.

The polymeric solid electrolyte film of Comparative Example 7 prepared by the solution casting method has Ra of 1.3 $\mu$m or more, and the polymeric solid electrolyte film of Example 6 prepared by the transfer method is measured to have Ra of 0.4 $\mu$m or less.

Therefore, it was found that the polymeric solid electrolyte film produced by the transfer method has more uniform and smooth surface roughness characteristics compared to the film produced by the solution casting method.

**Experimental Example 4: Confirmation if side reactions occur between polymeric solid electrolyte film and lithium metal**

The polymeric solid electrolyte film of Example 1 was transferred onto lithium metal and observed for the occurrence of side reactions between the polymeric solid electrolyte film and the lithium metal.

Further, the solution for forming a polymeric solid electrolyte film of Comparative Example 4 was solution cast on lithium metal to form a polymeric solid electrolyte film, and observed whether a side reactions between the polymeric solid electrolyte film and the lithium metal occurred.

In addition, the free-standing polymeric solid electrolyte film of Example 10 was laminated onto lithium metal.

FIGs. 6a to 6c are photographs illustrating the formation of polymeric solid electrolyte films on lithium metal by transfer, solution casting, and free-standing film lamination, respectively.

As a result, as shown in FIG. 6a, it was found that the polymeric solid electrolyte film was transferred onto the lithium metal in Example 1 and the polymeric solid electrolyte film was retained without further side reactions.

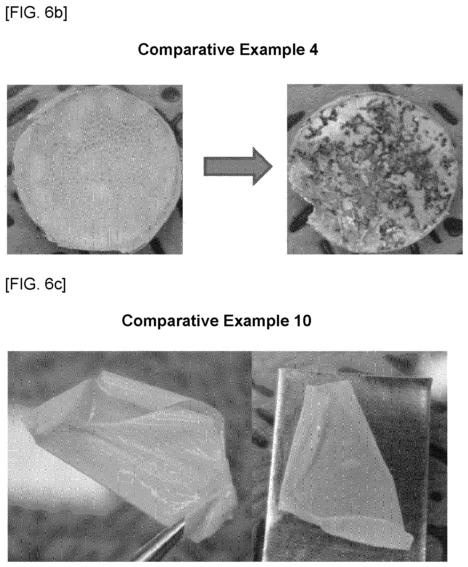

On the other hand, as shown in FIG. 6b, when the polymeric solid electrolyte film was formed on the lithium metal by solution casting in Comparative Example 4, it was found that a side reaction occurred between the solution for forming a polymeric solid electrolyte film and the lithium metal, and the polymeric solid electrolyte film could not be formed normally.

Furthermore, as shown in FIG. 6c, it was found that the free-standing polymeric solid electrolyte film prepared in Comparative Example 10 underwent deformation of the film as soon as it was separated from the release film, and the folding and slippage occurred on the lithium metal, preventing proper lamination.

Although the present disclosure has been described above by way of limited examples and drawings, the invention is not limited thereby, and various modifications and variations may be made by those having ordinary skill in the art, within the technical idea of the invention and the equivalent scope of the patent claims set forth below.

[Reference Numerals]

10: Release film
20: Polymeric solid electrolyte film
30: Lithium negative electrode

**Claims**

1. A polymeric solid electrolyte film in the form of a thin film with a uniform surface,
   wherein the surface roughness (Ra) of one side of the polymeric solid electrolyte film is 1.00 $\mu$m or less.

2. The polymeric solid electrolyte film according to claim 1,
   wherein the polymeric solid electrolyte film comprises 20 to 100 parts by weight of lithium salt, based on 100 parts by weight of the polymer for electrolyte.

3. The polymeric solid electrolyte film according to claim 2,
   wherein the polymer for electrolyte comprises at least one selected from the group consisting of polyethylene oxide (PEO), polyethylene carbonate (PEC), polypropylene carbonate (PPC), poly(vinylidene fluoride) (PVDF), poly(ethylene glycol) (PEG), poly(phenylene sulfide) (PPS), and derivatives thereof.

4. The polymeric solid electrolyte film according to claim 2,
   wherein the lithium salt comprises at least one selected from the group consisting of $(CF_3SO_2)_2NLi$(Lithium bis(trifluoromethanesulphonyl)imide, LiTFSI), $(FSO_2)_2NLi$(Lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN and $LiC(CF_3SO_2)_3$.

5. The polymeric solid electrolyte film according to claim 1,
   wherein an ionic conductivity of the polymeric solid electrolyte film is at least $1 \times 10^{-5}$ S/cm.

6. A method of producing a polymeric solid electrolyte film, comprising the steps of (S1) applying a solution for forming a polymeric solid electrolyte film on a release film and drying it to obtain a polymeric solid electrolyte film;

   (S2) positioning the polymeric solid electrolyte film on a positive electrode or negative electrode to transfer it; and
   (S3) separating the release film from the polymeric solid electrolyte film,
   wherein the release film has a peel strength of 15 gf/25 mm or less for the polymeric solid electrolyte film.

7. The method of producing a polymeric solid electrolyte film according to claim 6,
   wherein the release film comprises at least one selected from the group consisting of polyethylene terephthalate (PET), polyimide (PI), polyethylene (PE), polybutylene terephthalate (PBT), polypropylene (PP), polyvinyl chloride (PVC), polystyrene (PS), polyamide (PA), polycarbonate (PC), and polytetrafluoroethylene (PTFE).

8. The method of producing a polymeric solid electrolyte film according to claim 6,
   wherein the drying in step (S1) is a first drying at 20°C to 30°C, followed by a second drying at 90°C to 110°C.

9. The method of producing a polymeric solid electrolyte film according to claim 6,
   wherein the solution for forming a polymeric solid electrolyte film is prepared by mixing the polymer for electrolyte and the lithium salt in a solvent.

10. The method of producing a polymeric solid electrolyte film according to claim 9,
    wherein the solvent comprises at least one non-aqueous solvent selected from the group consisting of propylene carbonate (PC), ethylene carbonate (EC), vinylene carbonate (VC), diethyl carbonate (DEC), dimethyl carbonate (DMC), methylethyl carbonate (MEC), ethylmethyl carbonate (EMC), tetrahydrofuran (THF), 2-methyltetrahydrofuran (2MeTHF), dioxolane (DOX), dimethoxyethane (DME), diethoxyethane (DEE), γ-butyrolactone (GBL), acetonitrile (AN), and sulfolane.

11. The method of producing a polymeric solid electrolyte film according to claim 6,
    wherein the negative electrode is a lithium negative electrode.

12. An all-solid-state battery comprising a positive electrode, a negative electrode, and a polymeric solid electrolyte film interposed therebetween according to claim 1.

13. The all-solid-state battery according to claim 12,
    wherein a surface roughness of one side of the polymeric solid electrolyte film is 1.00 μm or less, and no additional film is formed between the other side of the polymeric solid electrolyte film and the positive electrode or negative electrode due to the side reactions.

14. The all-solid-state battery according to claim 12,
    wherein the negative electrode is a lithium negative electrode.

[FIG. 1]

[FIG. 2]

[FIG. 3]

**Example 3    Comparative Example 1**

[FIG. 4]

Comparative Example 1

Comparative Example 2

Comparative Example 3

[FIG. 5]

**Example 6**

(a)

20    10

(b)

10        20  30

(c)

20      30

[FIG. 6a]

**Example 1**

[FIG. 6b]

## Comparative Example 4

[FIG. 6c]

## Comparative Example 10

## INTERNATIONAL SEARCH REPORT

| International application No. |
|---|
| **PCT/KR2024/019836** |

| A. | CLASSIFICATION OF SUBJECT MATTER |
|---|---|
| | **H01M 10/0565**(2010.01)i; **H01M 4/134**(2010.01)i; **H01M 10/052**(2010.01)i |

According to International Patent Classification (IPC) or to both national classification and IPC

| B. | FIELDS SEARCHED |
|---|---|

Minimum documentation searched (classification system followed by classification symbols)

H01M 10/0565(2010.01); H01B 13/00(2006.01); H01M 10/052(2010.01); H01M 10/0567(2010.01); H01M 10/058(2010.01); H01M 10/0585(2010.01); H01M 10/42(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전고체 전지(all-solid battery), 고분자 고체 전해질막(polymer solid electrolyte membrane), 표면 조도(surface roughness), 이형 필름(release film), 박리 강도(peel strength)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2016-154157 A (IDEMITSU KOSAN CO., LTD.) 25 August 2016 (2016-08-25)<br>See claim 1; and paragraphs [0011], [0017], [0018], [0060], [0063], [0067], [0068], [0073], [0074], [0092] and [0107]. | 1,5-8,12,13 |
| Y | | 2-4,9-11,14 |
| Y | KR 10-2023-0086622 A (LG ENERGY SOLUTION, LTD.) 15 June 2023 (2023-06-15)<br>See claims 4, 9, 12 and 13; and paragraphs [0011], [0142] and [0159]-[0163]. | 2-4,9-11,14 |
| A | KR 10-2020-0134688 A (HYUNDAI MOTOR COMPANY et al.) 02 December 2020 (2020-12-02)<br>See abstract; and claims 1 and 13-20. | 1-14 |
| A | KR 10-2022-0069150 A (SAMSUNG ELECTRONICS CO., LTD.) 27 May 2022 (2022-05-27)<br>See abstract; and claims 1 and 2. | 1-14 |
| A | KR 10-2003-0022589 A (SKC CO., LTD.) 17 March 2003 (2003-03-17)<br>See abstract; and claims 1-11. | 1-14 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 March 2025** | **12 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/019836**

| Patent document cited in search report | | | Publication date (day/month/year) | Patent family member(s) | | | Publication date (day/month/year) |
|---|---|---|---|---|---|---|---|
| JP | 2016-154157 | A | 25 August 2016 | JP | 6257698 | B2 | 10 January 2018 |
| KR | 10-2023-0086622 | A | 15 June 2023 | KR | 10-2680035 | B1 | 01 July 2024 |
| KR | 10-2020-0134688 | A | 02 December 2020 | CN | 111987365 | A | 24 November 2020 |
| | | | | CN | 111987365 | B | 13 December 2024 |
| | | | | EP | 3742536 | A1 | 25 November 2020 |
| | | | | KR | 10-2764108 | B1 | 05 February 2025 |
| | | | | US | 2020-0373624 | A1 | 26 November 2020 |
| KR | 10-2022-0069150 | A | 27 May 2022 | EP | 4002517 | A1 | 25 May 2022 |
| | | | | EP | 4002517 | B1 | 24 April 2024 |
| | | | | US | 2022-0158226 | A1 | 19 May 2022 |
| KR | 10-2003-0022589 | A | 17 March 2003 | CN | 100262039 | C | 28 June 2006 |
| | | | | CN | 100412881 | A | 23 April 2003 |
| | | | | KR | 10-0513637 | B1 | 07 September 2005 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230174313
- KR 1020240179288
- KR 1020220033460